# EUROPEAN PATENT APPLICATION

(11) **EP 4 362 476 A1**
(43) Date of publication of application: **01.05.2024**
(21) Application number: 21947237.0
(22) Date of filing: 22.06.2021
(51) Int. Cl.: H04N 21/466, H04N 21/45, H04N 21/442, H04N 21/475

(54) **IMAGE DISPLAY DEVICE**

(71) Applicant: LG Electronics Inc., Yeongdeungpo-gu Seoul 07336 (KR)
(72) Inventor: KIM, Hyunseung, Seoul 06772 (KR)
(74) Representative: Schornack, Oliver
(86) International application number: PCT/KR2021/007820
(87) International publication number: WO 2022/270645

(57) **Abstract**

The present disclosure relates to an image display apparatus. An image display apparatus according to an embodiment of the present disclosure a display, an interface configured to, in response to input of account information, transmit the account information to an external server, and a signal processing device configured to output an image signal to the display, collect text and image-based information based on the account information, and display recommended content based on the collected information. Accordingly, appropriate content may be recommended and displayed based on the account and collected information.

## Description

### BACKGROUND

### 1. Field

The present disclosure relates to an image display apparatus, and more particularly, to an image display apparatus that may recommend and display appropriate content, based on accounts and collected information.

### 2. Description of the Related Art

An image display apparatus is an apparatus that displays images, and various images may be displayed through the image display apparatus. In particular, it is possible to connect to an external server through a network and display images or screens provided by the external server.

Recently, in order to improve the convenience of image display apparatuses, a function for providing recommended content has been provided.

In this regard, Korea Application Publication No. 10-2006-0062967 (hereinafter referred to as 'related art document') discloses a broadcast program recommendation device and method using Internet search history and TV viewing history.

According to the related art document, broadcast program recommendations are made using Internet search history and TV viewing history.

However, according to the related art document, it is unclear who is the subject of Internet search and TV viewing, and since the person who searches on the Internet cannot be identified, incorrect results may be derived when determining a user's taste.

### SUMMARY

An object of the present disclosure is to provide an image display apparatus capable of recommending and displaying appropriate content based on an account and collected information.

In accordance with the present disclosure, the above and other objects may be accomplished by the provision of an image display apparatus including: a display; an interface configured to, in response to input of account information, transmit the account information to an external server; and a signal processing device configured to output an image signal to the display, collect text and image-based information based on the account information, and display recommended content based on the collected information.

In response to input of account information on one account among a plurality of accounts, the signal processing device may be configured to transmit the input account information to the external server, and the interface transmit the collected information to a recommendation server and receives recommended content from the recommendation server.

The interface may request the recommended content from the recommendation server.

In response to a recommended content display input, the signal processing device may be configured to display the recommended content based on the collected information.

The signal processing device may include: an account information manager configured to manage the account information; an information collector configured to collect text and image-based information based on the account information; and a recommended service manager configured to receive and manage recommended content from the recommendation server.

The signal processing device may display an account screen including a plurality of accounts, and in response to a selection of first account information from the plurality of accounts in the account screen, the signal processing device may be configured to transmit the selected first account information to an external first server corresponding to the first account and display a screen related to the external first server.

The signal processing device may collect text and image-based information in the screen related to the external first server and may be configured to display first recommended content based on the collected information.

In response to a selection of second account information from the plurality of accounts in the account screen, the signal processing device may be configured to transmit the selected second account information to an external second server corresponding to the second account and display a screen related to the external second server.

The signal processing device may collect text and image-based information in the screen related to the external second server and may be configured to display second recommended content based on the collected information.

The account information may include account information of a social network service.

The text and image-based information may include at least one of text posting information, posting information, search history information, or viewing history information.

In accordance with the present disclosure, the above and other objects may be accomplished by the provision of an image display apparatus including: a display; an interface configured to, in response to input of account information of a social network service, transmit the account information to an external server providing a social network service; and a signal processing device configured to output an image signal to the display, collect text and image-based information based on the account information, and display recommended content based on the collected information.

In response to input of account information on one account of a social network service among a plurality of accounts of social network services, the signal processing device may be configured to transmit the input account information to the external server, and the interface may transmit the collected information to a recommendation server and receives recommended content from the recommendation server.

In response to a recommended content display input, the signal processing device may be configured to display the recommended content based on the collected information.

The signal processing device may display an account screen including a plurality of accounts of social network services, and in response to a selection of first account information from the plurality of accounts of social network services in the account screen, the signal processing device may be configured to transmit the selected first account information to an external first server corresponding to the first account and display a screen related to the external first server.

The signal processing device may collect text and image-based information in the screen related to the external first server and may be configured to display first recommended content based on the collected information.

In response to a selection of second account information from the plurality of accounts of social network services in the account screen, the signal processing device may be configured to transmit the selected second account information to an external second server corresponding to the second account and display a screen related to the external second server.

The signal processing device may collect text and image-based information in the screen related to the external second server and may be configured to display second recommended content based on the collected information.

The signal processing device may be configured to change the information collection method based on a selected account of a social network service.

The signal processing device may be configured to variably display the recommended content according to the collected information.

### EFFECTS OF THE DISCLOSURE

The image display apparatus according to an embodiment of the present disclosure includes: a display; an interface configured to, in response to input of account information, transmit the account information to an external server; and a signal processing device configured to output an image signal to the display, collect text and image-based information based on the account information, and display recommended content based on the collected information. Accordingly, appropriate content may be recommended and displayed based on the account and collected information.

Meanwhile, in response to input of account information on one account among a plurality of accounts, the signal processing device may be configured to transmit the input account information to the external server, and the interface transmit the collected information to a recommendation server and receives recommended content from the recommendation server. Accordingly, appropriate content may be recommended and displayed based on the account and collected information.

Meanwhile, the interface may request the recommended content from the recommendation server. Accordingly, appropriate content may be recommended and displayed based on the account and collected information.

In response to a recommended content display input, the signal processing device may be configured to display the recommended content based on the collected information. Accordingly, appropriate content may be recommended and displayed based on the account and collected information.

The signal processing device may include: an account information manager configured to manage the account information; an information collector configured to collect text and image-based information based on the account information; and a recommended service manager configured to receive and manage recommended content from the recommendation server. Accordingly, appropriate content may be recommended and displayed based on the account and collected information.

The signal processing device may display an account screen including a plurality of accounts, and in response to a selection of first account information from the plurality of accounts in the account screen, the signal processing device may be configured to transmit the selected first account information to an external first server corresponding to the first account and display a screen related to the external first server. Accordingly, appropriate content may be recommended and displayed based on the account and collected information.

The signal processing device may collect text and image-based information in the screen related to the external first server and may be configured to display first recommended content based on the collected information. Accordingly, appropriate content may be recommended and displayed based on the account and collected information.

In response to a selection of second account information from the plurality of accounts in the account screen, the signal processing device may be configured to transmit the selected second account information to an external second server corresponding to the second account and display a screen related to the external second server. Accordingly, appropriate content may be recommended and displayed based on the account and collected information.

The signal processing device may collect text and image-based information in the screen related to the external second server and may be configured to display second recommended content based on the collected information. Accordingly, appropriate content may be recommended and displayed based on the account and collected information.

The account information may include account information of a social network service. Accordingly, appropriate content may be recommended and displayed based on the account of a social network service and collected information.

The text and image-based information may include at least one of text posting information, posting information, search history information, or viewing history information. Accordingly, appropriate content may be recommended and displayed based on the account and collected information.

The image display apparatus according to an embodiment of the present disclosure includes: a display; an interface configured to, in response to input of account information of a social network service, transmit the account information to an external server providing a social network service; and a signal processing device configured to output an image signal to the display, collect text and image-based information based on the account information, and display recommended content based on the collected information. Accordingly, appropriate content may be recommended and displayed based on the account and collected information.

In response to input of account information on one account of a social network service among a plurality of accounts of social network services, the signal processing device may be configured to transmit the input account information to the external server, and the interface may transmit the collected information to a recommendation server and receives recommended content from the recommendation server. Accordingly, appropriate content may be recommended and displayed based on the account of a social network service and collected information.

In response to a recommended content display input, the signal processing device may be configured to display the recommended content based on the collected information. Accordingly, appropriate content may be recommended and displayed based on the account of a social network service and collected information.

The signal processing device may display an account screen including a plurality of accounts of social network services, and in response to a selection of first account information from the plurality of accounts of social network services in the account screen, the signal processing device may be configured to transmit the selected first account information to an external first server corresponding to the first account and display a screen related to the external first server. Accordingly, appropriate content may be recommended and displayed based on the account of a social network service and collected information.

The signal processing device may collect text and image-based information in the screen related to the external first server and may be configured to display first recommended content based on the collected information. Accordingly, appropriate content may be recommended and displayed based on the account of a social network service and collected information.

In response to a selection of second account information from the plurality of accounts of social network services in the account screen, the signal processing device may be configured to transmit the selected second account information to an external second server corresponding to the second account and display a screen related to the external second server. Accordingly, appropriate content may be recommended and displayed based on the account of a social network service and collected information.

The signal processing device may collect text and image-based information in the screen related to the external second server and may be configured to display second recommended content based on the collected information. Accordingly, appropriate content may be recommended and displayed based on the account of a social network service and collected information.

The signal processing device may be configured to change the information collection method based on a selected account of a social network service. Accordingly, appropriate content may be recommended and displayed based on the account of a social network service and collected information.

### BRIEF DESCRIPTION OF THE DRAWINGS

FIG. 1 is a diagram showing an image display apparatus according to an embodiment of the present disclosure;
FIG. 2 is an example of an internal block diagram of the image display apparatus;
FIG. 3 is an example of an internal block diagram of a signal processing device of FIG. 2;
FIG. 4A is a diagram showing a method of controlling a remote controller of FIG. 2;
FIG. 4B is an internal block diagram of the remote controller of FIG. 2;
FIG. 5 is an example of an internal block diagram of a signal processing device of FIG. 1.
FIG. 6 is a flowchart showing an example of a method of operating an image display apparatus according to an embodiment of the present disclosure.
FIG. 7 is a flowchart showing another example of a method of operating an image display apparatus according to an embodiment of the present disclosure.
FIGS. 8A to 9E are diagrams referenced in the description of the operation method of FIG. 7 or FIG. 8.

### DETAILED DESCRIPTION OF THE PREFERRED EMBODIMENTS

Hereinafter, the present disclosure will be described in detail with reference to the accompanying drawings.

Regarding constituent elements used in the following description, suffixes "module" and "unit" are given only in consideration of ease in the preparation of the specification, and do not have or serve as different meanings. Accordingly, the suffixes "module" and "unit" may be used interchangeably.

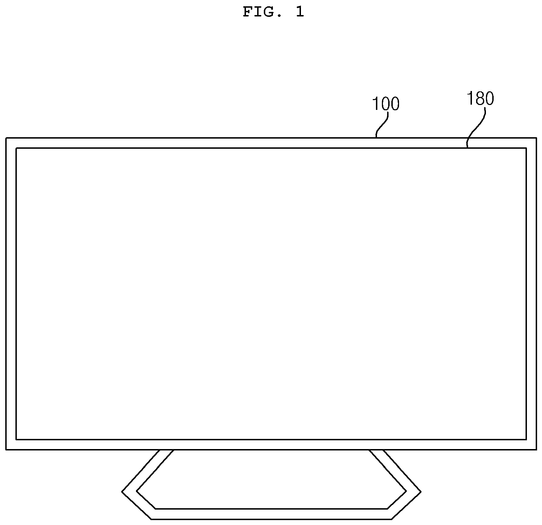

FIG. 1 is an example of a drawing showing an image display apparatus according to an embodiment of the present disclosure.

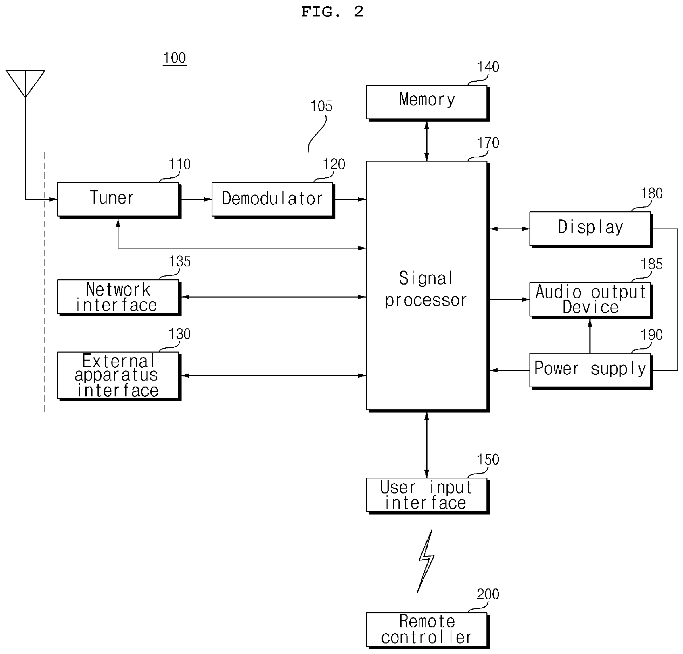

Referring to the drawings, an image display apparatus 100 according to an embodiment of the present disclosure includes a display 180 displaying images, an external apparatus interface (130 of FIG. 2) or a network interface (135 of FIG. 2) transmitting account information to an external server when the account information is input, and a signal processing device 170 performing controlling to output an image signal to the display 180, collect text and image-based information based on the account information, and display recommended content based on the collected information. Accordingly, appropriate content may be recommended and displayed based on the account and collected information.

Meanwhile, the account information may include account information of a social network service (SNS).

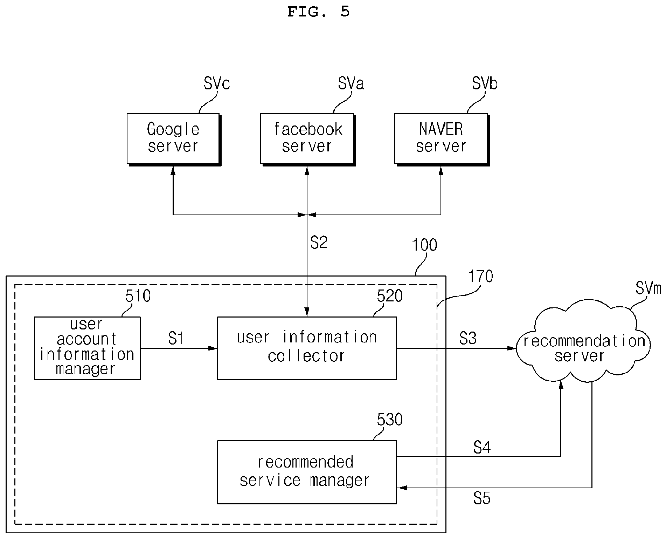

Accordingly, when account information for a social network service is input, the image display apparatus 100 may transmit the account information to a server (SVa, etc. in FIG. 5) that provides the social network service, and displays a social network service screen received from the server.

In addition, the image display apparatus 100 may collect text and image-based information in the social network service screen and transmit the collected information to an external recommendation server (SVm in FIG. 5).

In addition, the image display apparatus 100 may receive recommended content from the external recommendation server (SVm in FIG. 5) and display the recommended content. Accordingly, appropriate content may be recommended and displayed based on the social network service account and collected information. This will be described in more detail with reference to FIG. 5 and below.

Meanwhile, the image display apparatus 100 of FIG. 1 may be a TV, a monitor, a tablet PC, or a vehicle display device.

FIG. 2 is an example of an internal block diagram of the image display apparatus of FIG. 1.

Referring to FIG. 2, the image display apparatus 100 according to an embodiment of the present disclosure may include an image receiving device 105, an external apparatus interface 130, a network interface 135, a memory 140, a user input interface 150, a sensor device (not shown), a signal processing device 170, a display 180, and an audio output device 185.

The image receiving device 105 may receive an input image. For example, the image receiving device 105 may receive external input images such as a broadcasting image, or an HDMI image, and a streamed image, etc.

The image receiving device 105 may include a tuner 110, a demodulator 120, the network interface 135, and the external apparatus interface 130.

Meanwhile, unlike the figure, the image receiving device 105 may include only the tuner 110, the demodulator 120, and the external apparatus interface 130. That is, the network interface 135 may not be included.

The tuner 110 selects an RF broadcast signal corresponding to a channel selected by a user or all pre-stored channels among radio frequency (RF) broadcast signals received through an antenna (not shown). In addition, the selected RF broadcast signal is converted into an intermediate frequency signal, a baseband image, or an audio signal.

Meanwhile, the tuner 110 may include a plurality of tuners for receiving broadcast signals of a plurality of channels. Alternatively, a single tuner that simultaneously receives broadcast signals of a plurality of channels is also available.

The demodulator 120 receives the converted digital IF signal DIF from the tuner 110 and performs a demodulation operation.

The demodulator 120 may perform demodulation and channel decoding and then output a stream signal TS. At this time, the stream signal may be a multiplexed signal of an image signal, an audio signal, or a data signal.

The stream signal output from the demodulator 120 may be input to the signal processing device 170. The signal processing device 170 performs demultiplexing, image/audio signal processing, and the like, and then outputs an image to the display 180 and outputs audio to the audio output device 185.

The external apparatus interface 130 may transmit or receive data with a connected external apparatus (not shown), e.g., a set-top box 50.

To this end, the external apparatus interface 130 may include an A/V input (not shown), a wireless transceiver (not shown), etc.

The external apparatus interface 130 may be connected in wired or wirelessly to an external apparatus, such as a digital versatile disk (DVD), a Blu ray, a game equipment, a camera, a camcorder, a computer (note book), and a set-top box, and may perform an input/output operation with an external apparatus.

The A/V input and output device of the external apparatus interface 130 may receive an image and voice signa from an external device. Meanwhile, a wireless transceiver (not shown) of the external apparatus interface 130 may perform short-range wireless communication with other electronic apparatus.

Through the wireless transceiver (not shown), the external apparatus interface 130 may exchange data with an adjacent mobile terminal 600. In particular, in a mirroring mode, the external apparatus interface 130 may receive device information, executed application information, application image, and the like from the mobile terminal 600.

The network interface 135 provides an interface for connecting the image display apparatus 100 to a wired/wireless network including the Internet network. For example, the network interface 135 may receive, via the network, content or data provided by the Internet, a content provider, or a network operator.

Meanwhile, the network interface 135 may include a wireless transceiver (not shown).

The memory 140 may store a program for each signal processing and control in the signal processing device 170, and may store signal-processed image, audio, or data signal.

In addition, the memory 140 may serve to temporarily store image, audio, or data signal input to the external apparatus interface 130. In addition, the memory 140 may store information on a certain broadcast channel through a channel memory function, such as a channel map.

Although FIG. 2 illustrates that the memory is provided separately from the signal processing device 170, the scope of the present disclosure is not limited thereto. The memory 140 may be included in the signal processing device 170.

The user input interface 150 transmits a signal input by the user to the signal processing device 170 or transmits a signal from the signal processing device 170 to the user.

For example, it may transmit/receive a user input signal, such as power on/off, channel selection, screen setting, etc., from a remote controller 200, may transfer a user input signal input from a local key (not shown), such as a power key, a channel key, a volume key, a set value, etc., to the signal processing device 170, may transfer a user input signal input from a sensor device (not shown) that senses a user's gesture to the signal processing device 170, or may transmit a signal from the signal processing device 170 to the sensor device (not shown).

The signal processing device 170 may demultiplex the input stream through the tuner 110, the demodulator 120, the network interface 135, or the external apparatus interface 130, or process the demultiplexed signals to generate and output a signal for image or audio output.

For example, the signal processing device 170 receives a broadcast signal received by the image receiving device 105 or an HDMI signal, and perform signal processing based on the received broadcast signal or the HDMI signal to thereby output a processed image signal.

The image signal processed by the signal processing device 170 is input to the display 180, and may be displayed as an image corresponding to the image signal. In addition, the image signal processed by the signal processing device 170 may be input to the external output apparatus through the external apparatus interface 130.

The audio signal processed by the signal processing device 170 may be output to the audio output device 185 as an audio signal. In addition, audio signal processed by the signal processing device 170 may be input to the external output apparatus through the external apparatus interface 130.

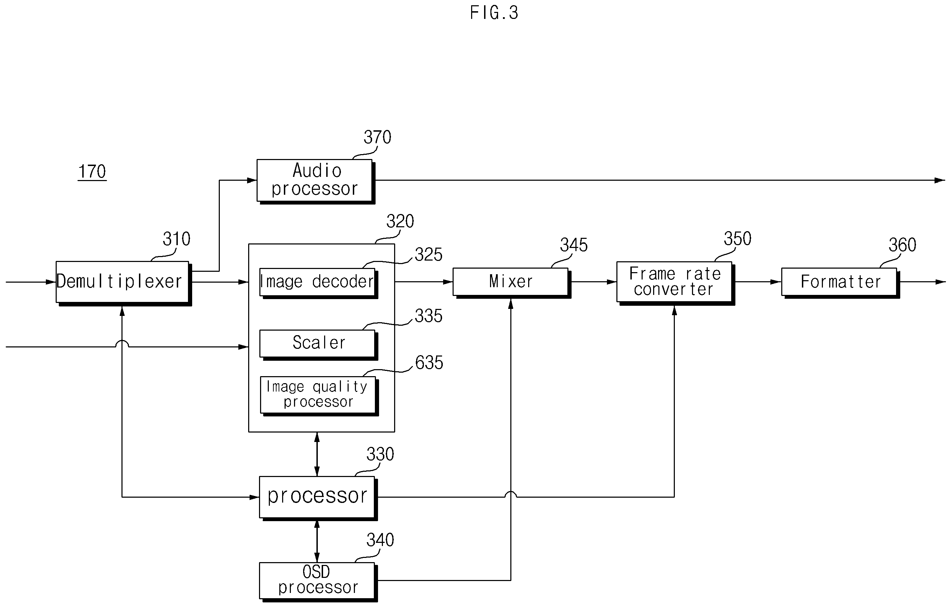

Although not shown in FIG. 2, the signal processing device 170 may include a demultiplexer, an image processor, and the like. That is, the signal processing device 170 may perform a variety of signal processing and thus it may be implemented in the form of a system on chip (SOC). This will be described later with reference to FIG. 3.

In addition, the signal processing device 170 may control the overall operation of the image display apparatus 100. For example, the signal processing device 170 may control the tuner 110 to control the tuning of the RF broadcast corresponding to the channel selected by the user or the previously stored channel.

In addition, the signal processing device 170 may control the image display apparatus 100 according to a user command input through the user input interface 150 or an internal program.

Meanwhile, the signal processing device 170 may control the display 180 to display an image. At this time, the image displayed on the display 180 may be a still image or a moving image, and may be a 2D image or a 3D image.

Meanwhile, the signal processing device 170 may display a certain object in an image displayed on the display 180. For example, the object may be at least one of a connected web screen (newspaper, magazine, etc.), an electronic program guide (EPG), various menus, a widget, an icon, a still image, a moving image, and a text.

Meanwhile, the signal processing device 170 may recognize the position of the user based on the image photographed by a photographing device (not shown). For example, the distance (z-axis coordinate) between a user and the image display apparatus 100 may be determined. In addition, the x-axis coordinate and the y-axis coordinate in the display 180 corresponding to a user position may be determined.

The display 180 generates a driving signal by converting an image signal, a data signal, an OSD signal, a control signal processed by the signal processing device 170, an image signal, a data signal, a control signal, and the like received from the external apparatus interface 130.

Meanwhile, the display 180 may be configured as a touch screen and used as an input device in addition to an output device.

The audio output device 185 receives a signal processed by the signal processing device 170 and outputs it as an audio.

The photographing device (not shown) photographs a user. The photographing device (not shown) may be implemented by a single camera, but the present disclosure is not limited thereto and may be implemented by a plurality of cameras. Image information photographed by the photographing device (not shown) may be input to the signal processing device 170.

The signal processing device 170 may sense a gesture of the user based on each of the images photographed by the photographing device (not shown), the signals detected from the sensor device (not shown), or a combination thereof.

Meanwhile, the signal processing device 170 may be implemented in the form of a system-on-chip (SOC).

The power supply 190 supplies corresponding power to the image display apparatus 100. Particularly, the power may be supplied to a signal processing device 170 which may be implemented in the form of a system on chip (SOC), a display 180 for displaying an image, and an audio output device 185 for outputting an audio.

Specifically, the power supply 190 may include a converter for converting an AC power into a DC power, and a DC/DC converter for converting the level of the DC power.

The remote controller 200 transmits the user input to the user input interface 150. To this end, the remote controller 200 may use Bluetooth, a radio frequency (RF) communication, an infrared (IR) communication, an Ultra Wideband (UWB), ZigBee, or the like. In addition, the remote controller 200 may receive the image, audio, or data signal output from the user input interface 150, and display it on the remote controller 200 or output it as an audio.

Meanwhile, the image display apparatus 100 may be a fixed or mobile digital broadcast receiver capable of receiving digital broadcast.

Meanwhile, a block diagram of the image display apparatus 100 shown in FIG. 2 is a block diagram for an embodiment of the present disclosure. Each component of the block diagram may be integrated, added, or omitted according to a specification of the image display apparatus 100 actually implemented. That is, two or more components may be combined into a single component as needed, or a single component may be split into two or more components. The function performed in each block is described for the purpose of illustrating embodiments of the present disclosure, and specific operation and apparatus do not limit the scope of the present disclosure.

FIG. 3 is an example of an internal block diagram of the signal processing device in FIG. 2.

Referring to the figure, the signal processing device 170 according to an embodiment of the present disclosure may include a demultiplexer 310, an image processor 320, a processor 330, and an audio processor 370. In addition, the signal processing device 170 may further include and a data processor (not shown).

The demultiplexer 310 demultiplexes the input stream. For example, when an MPEG-2 TS is input, it may be demultiplexed into image, audio, and data signal, respectively. Here, the stream signal input to the demultiplexer 310 may be a stream signal output from the tuner 110, the demodulator 120, or the external apparatus interface 130.

The image processor 320 may perform signal processing on an input image. For example, the image processor 320 may perform image processing on an image signal demultiplexed by the demultiplexer 310.

To this end, the image processor 320 may include an image decoder 325, a scaler 335, an image quality processor 635, an image encoder (not shown), an OSD processor 340, a frame rate converter 350, a formatter 360, etc.

The image decoder 325 decodes a demultiplexed image signal, and the scaler 335 performs scaling so that the resolution of the decoded image signal may be output from the display 180.

The image decoder 325 may include a decoder of various standards. For example, a 3D image decoder for MPEG-2, H.264 decoder, a color image, and a depth image, and a decoder for a multiple view image may be provided.

The scaler 335 may scale an input image signal decoded by the image decoder 325 or the like.

For example, if the size or resolution of an input image signal is small, the scaler 335 may upscale the input image signal, and, if the size or resolution of the input image signal is great, the scaler 335 may downscale the input image signal.

The image quality processor 635 may perform image quality processing on an input image signal decoded by the image decoder 325 or the like.

For example, the image quality processor 625 may perform noise reduction processing on an input image signal, extend a resolution of high gray level of the input image signal, perform image resolution enhancement, perform high dynamic range (HDR)-based signal processing, change a frame rate, perform image quality processing suitable for properties of a panel, especially an OLED panel, etc.

The OSD processor 340 generates an OSD signal according to a user input or by itself. For example, based on a user input signal, the OSD processor 340 may generate a signal for displaying various information as a graphic or a text on the screen of the display 180. The generated OSD signal may include various data, such as a user interface screen of the image display apparatus 100, various menu screens, a widget, and an icon. In addition, the generated OSD signal may include a 2D object or a 3D object.

In addition, the OSD processor 340 may generate a pointer that may be displayed on the display, based on a pointing signal input from the remote controller 200. In particular, such a pointer may be generated by a pointing signal processing device, and the OSD processor 340 may include such a pointing signal processing device (not shown). Obviously, the pointing signal processing device (not shown) may be provided separately from the OSD processor 340.

The frame rate converter (FRC) 350 may convert a frame rate of an input image. Meanwhile, the frame rate converter 350 may output the input image without converting the frame rate.

Meanwhile, the formatter 360 may change a format of an input image signal into a format suitable for displaying the image signal on a display and output the image signal in the changed format.

In particular, the formatter 360 may change a format of an image signal to correspond to a display panel.

Meanwhile, the formatter 360 may change the format of an image signal. For example, the formatter 360 may change the format of a 3D image signal into any one of various 3D formats, such as a side-by-side format, a top/down format, a frame sequential format, an interlaced format, a checker box format, etc.

The processor 330 may control overall operations of the image display apparatus 100 or the signal processing device 170.

For example, the processor 330 may control the tuner 110 to control the tuning of an RF broadcast corresponding to a channel selected by a user or a previously stored channel.

In addition, the processor 330 may control the image display apparatus 100 according to a user command input through the user input interface 150 or an internal program.

In addition, the processor 330 may transmit data to the network interface 135 or to the external apparatus interface 130.

In addition, the processor 330 may control the demultiplexer 310, the image processor 320, and the like in the signal processing device 170.

Meanwhile, the audio processor 370 in the signal processing device 170 may perform the audio processing of the demultiplexed audio signal. To this end, the audio processor 370 may include various decoders.

In addition, the audio processor 370 in the signal processing device 170 may process a base, a treble, a volume control, and the like.

The data processor (not shown) in the signal processing device 170 may perform data processing of the demultiplexed data signal. For example, when the demultiplexed data signal is a coded data signal, it may be decoded. The encoded data signal may be electronic program guide information including broadcast information, such as a start time and an end time of a broadcast program broadcasted on each channel.

Meanwhile, a block diagram of the signal processing device 170 shown in FIG. 3 is a block diagram for an embodiment of the present disclosure. Each component of the block diagram may be integrated, added, or omitted according to a specification of the signal processing device 170 actually implemented.

In particular, the frame rate converter 350 and the formatter 360 may be provided separately in addition to the image processor 320.

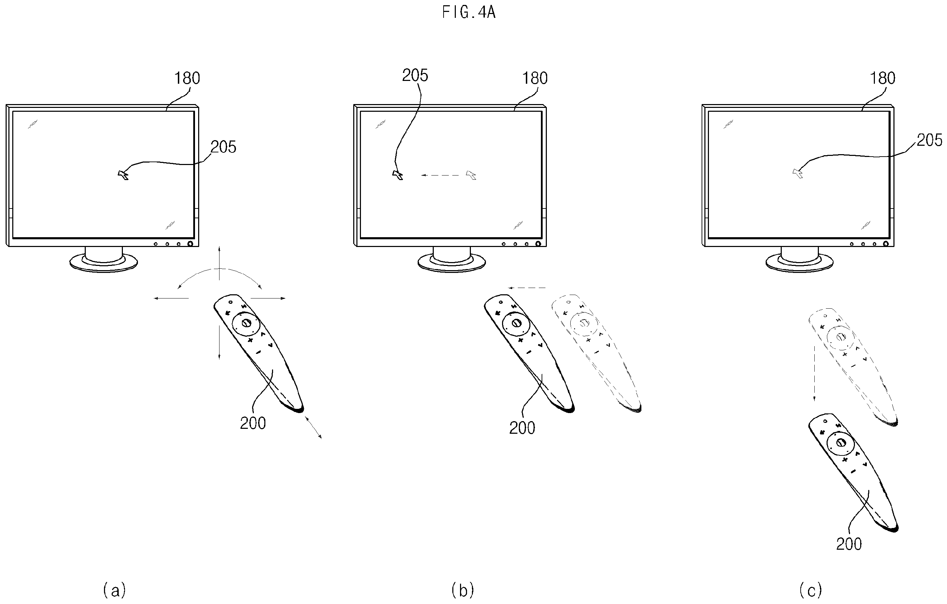

FIG. 4A is a diagram illustrating a control method of a remote controller of FIG. 2.

As shown in FIG. 4A(a), it is illustrated that a pointer 205 corresponding to the remote controller 200 is displayed on the display 180.

The user may move or rotate the remote controller 200 up and down, left and right (FIG. 4A(b)), and back and forth (FIG. 4A(c)). The pointer 205 displayed on the display 180 of the image display apparatus corresponds to the motion of the remote controller 200. Such a remote controller 200 may be referred to as a space remote controller or a 3D pointing apparatus, because the pointer 205 is moved and displayed according to the movement in a 3D space, as shown in the figure.

FIG. 4A(b) illustrates that when the user moves the remote controller 200 to the left, the pointer 205 displayed on the display 180 of the image display apparatus also moves to the left correspondingly.

Information on the motion of the remote controller 200 detected through a sensor of the remote controller 200 is transmitted to the image display apparatus. The image display apparatus may calculate the coordinate of the pointer 205 from the information on the motion of the remote controller 200. The image display apparatus may display the pointer 205 to correspond to the calculated coordinate.

FIG. 4A(c) illustrates a case where the user moves the remote controller 200 away from the display 180, while pressing a specific button of the remote controller 200. Thus, a selection area within the display 180 corresponding to the pointer 205 may be zoomed in so that it may be displayed to be enlarged. Meanwhile, when the user moves the remote controller 200 close to the display 180, the selection area within the display 180 corresponding to the pointer 205 may be zoomed out so that it may be displayed to be reduced. Meanwhile, when the remote controller 200 moves away from the display 180, the selection area may be zoomed out, and when the remote controller 200 approaches the display 180, the selection area may be zoomed in.

Meanwhile, when the specific button of the remote controller 200 is pressed, it is possible to exclude the recognition of vertical and lateral movement. That is, when the remote controller 200 moves away from or approaches the display 180, the up, down, left, and right movements are not recognized, and only the forward and backward movements are recognized. Only the pointer 205 is moved according to the up, down, left, and right movements of the remote controller 200 in a state where the specific button of the remote controller 200 is not pressed.

Meanwhile, the moving speed or the moving direction of the pointer 205 may correspond to the moving speed or the moving direction of the remote controller 200.

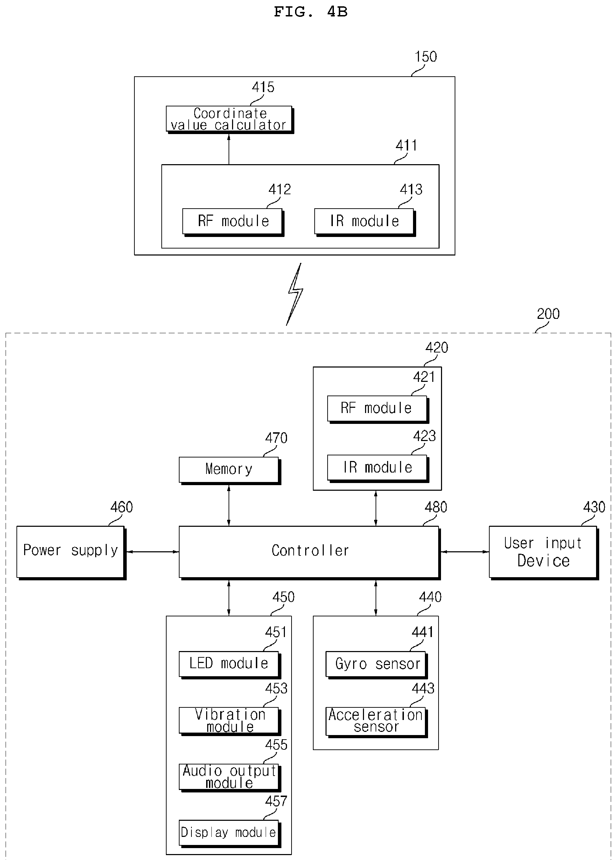

FIG. 4B is an internal block diagram of the remote controller of FIG. 2.

Referring to the figure, the remote controller 200 includes a wireless transceiver 425, a user input device 435, a sensor device 440, an output device 450, a power supply 460, a memory 470, and a controller 480.

The wireless transceiver 425 transmits/receives a signal to/from any one of the image display apparatuses according to the embodiments of the present disclosure described above. Among the image display apparatuses according to the embodiments of the present disclosure, one image display apparatus 100 will be described as an example.

In the present embodiment, the remote controller 200 may include an RF module 421 for transmitting and receiving signals to and from the image display apparatus 100 according to a RF communication standard. In addition, the remote controller 200 may include an IR module 423 for transmitting and receiving signals to and from the image display apparatus 100 according to a IR communication standard.

In the present embodiment, the remote controller 200 transmits a signal containing information on the motion of the remote controller 200 to the image display apparatus 100 through the RF module 421.

In addition, the remote controller 200 may receive the signal transmitted by the image display apparatus 100 through the RF module 421. In addition, if necessary, the remote controller 200 may transmit a command related to power on/off, channel change, volume change, and the like to the image display apparatus 100 through the IR module 423.

The user input device 435 may be implemented by a keypad, a button, a touch pad, a touch screen, or the like. The user may operate the user input device 435 to input a command related to the image display apparatus 100 to the remote controller 200. When the user input device 435 includes a hard key button, the user may input a command related to the image display apparatus 100 to the remote controller 200 through a push operation of the hard key button. When the user input device 435 includes a touch screen, the user may touch a soft key of the touch screen to input the command related to the image display apparatus 100 to the remote controller 200. In addition, the user input device 435 may include various types of input means, such as a scroll key, a jog key, etc., which may be operated by the user, and the present disclosure does not limit the scope of the present disclosure.

The sensor device 440 may include a gyro sensor 441 or an acceleration sensor 443. The gyro sensor 441 may sense information regarding the motion of the remote controller 200.

For example, the gyro sensor 441 may sense information on the operation of the remote controller 200 based on the x, y, and z axes. The acceleration sensor 443 may sense information on the moving speed of the remote controller 200. Meanwhile, a distance measuring sensor may be further provided, and thus, the distance to the display 180 may be sensed.

The output device 450 may output an image or an audio signal corresponding to the operation of the user input device 435 or a signal transmitted from the image display apparatus 100. Through the output device 450, the user may recognize whether the user input device 435 is operated or whether the image display apparatus 100 is controlled.

For example, the output device 450 may include an LED module 451 that is turned on when the user input device 435 is operated or a signal is transmitted/received to/from the image display apparatus 100 through the wireless transceiver 425, a vibration module 453 for generating a vibration, an audio output module 455 for outputting an audio, or a display module 457 for outputting an image.

The power supply 460 supplies power to the remote controller 200. When the remote controller 200 is not moved for a certain time, the power supply 460 may stop the supply of power to reduce a power waste. The power supply 460 may resume power supply when a certain key provided in the remote controller 200 is operated.

The memory 470 may store various types of programs, application data, and the like necessary for the control or operation of the remote controller 200. If the remote controller 200 wirelessly transmits and receives a signal to/from the image display apparatus 100 through the RF module 421, the remote controller 200 and the image display apparatus 100 transmit and receive a signal through a certain frequency band. The controller 480 of the remote controller 200 may store information regarding a frequency band or the like for wirelessly transmitting and receiving a signal to/from the image display apparatus 100 paired with the remote controller 200 in the memory 470 and may refer to the stored information.

The controller 480 controls various matters related to the control of the remote controller 200. The controller 480 may transmit a signal corresponding to a certain key operation of the user input device 435 or a signal corresponding to the motion of the remote controller 200 sensed by the sensor device 440 to the image display apparatus 100 through the wireless transceiver 425.

The user input interface 150 of the image display apparatus 100 includes a wireless transceiver 151 that may wirelessly transmit and receive a signal to and from the remote controller 200 and a coordinate value calculator 415 that may calculate the coordinate value of a pointer corresponding to the operation of the remote controller 200.

The user input interface 150 may wirelessly transmit and receive a signal to and from the remote controller 200 through the RF module 412. In addition, the user input interface 150 may receive a signal transmitted by the remote controller 200 through the IR module 413 according to a IR communication standard.

The coordinate value calculator 415 may correct a hand shake or an error from a signal corresponding to the operation of the remote controller 200 received through the wireless transceiver 151 and calculate the coordinate value (x, y) of the pointer 205 to be displayed on the display 180.

The transmission signal of the remote controller 200 inputted to the image display apparatus 100 through the user input interface 150 is transmitted to the controller 180 of the image display apparatus 100. The controller 180 may determine the information on the operation of the remote controller 200 and the key operation from the signal transmitted from the remote controller 200, and, correspondingly, control the image display apparatus 100.

For another example, the remote controller 200 may calculate the pointer coordinate value corresponding to the operation and output it to the user input interface 150 of the image display apparatus 100. In this case, the user input interface 150 of the image display apparatus 100 may transmit information on the received pointer coordinate value to the controller 180 without a separate correction process of hand shake or error.

For another example, unlike the figure, the coordinate value calculator 415 may be provided in the signal processing device 170, not in the user input interface 150.

FIG. 5 is an example of an internal block diagram of the signal processing device of FIG. 1.

Referring to FIG. 5, the signal processing device 170 in the image display apparatus 100 according to an embodiment of the present disclosure may include an account information manager 510 that manages account information, an information collector 520 that collects text and image-based information based on the account information, and a recommended service manager 530 that receives and manages recommended content from a recommendation server SVm.

The account information manager 510 may manage or store a plurality of user account information.

For example, the account information manager 510 may manage or store account information of a plurality of social network services (SNS).

In the drawing, Facebook, Naver, Google, etc. are shown as examples of a plurality of social network services (SNS), but various examples may be provided.

Meanwhile, when one of the plurality of accounts is selected based on an input signal of the remote controller 200 or a user voice signal, the account information manager 510 may transmit the selected account information to the information collector 520 (S1).

The information collector 520 may be configured to transmit the selected account information to an external SNS server corresponding to the selected account information through the external apparatus interface 130 or the network interface 135.

In the drawing, for example, external SNS servers include a first server SVa, a second server SVb, and a third server SVc corresponding to Facebook, Naver, and Google, respectively.

For example, when an account for Facebook is selected, the information collector 520 may control to transmit account information for Facebook to the first server SVa through the external apparatus interface 130 or the network interface 135 (S2).

In addition, the information collector 520 in the signal processing device 170 may receive data regarding a access screen from the first server SVa and may be configured to display a access screen on the display 180.

The information collector 520 within the signal processing device 170 may collect information based on the data received from the first server SVa.

In particular, the information collector 520 in the signal processing device 170 may collect information based on text and image-based information received from the first server SVa.

For example, the text and image-based information may include at least one of text posting information, posting information, search history information, or viewing history information.

Meanwhile, the information collector 520 in the signal processing device 170 may collect information based on text data and image data in various screens that the user searches.

For example, the information collector 520 in the signal processing device 170 may analyze the user's posting information, preferred posting information, etc., extract content information or genre information extracted from text data, and store preferred content information or genre information using an application programming interface (API) of the SNS access screen.

Next, in response to a recommended content display input, the information collector 520 in the signal processing device 170 may transmit the collected information the content recommendation server SVm through the external apparatus interface 130 or the network interface 135 (S3).

The information transmitted to the recommendation server SVm may be viewing history information, preferred content information, or genre information.

Next, in response to a recommended content display input according to the input signal of the remote controller 200 or the user voice signal, the recommended service manager 530 in the signal processing device 170 may request recommended content from the recommendation server SVm through the external apparatus interface 130 or the network interface 135 (S4).

Then, the recommended service manager 530 in the signal processing device 170 may receive recommended content from the recommendation server SVm through the external apparatus interface 130 or the network interface 135 (S5) and display the content.

Accordingly, appropriate content may be recommended and displayed based on the account and collected information.

Meanwhile, the signal processing device 170 may be configured to display the recommended content variably according to the collected information.

For example, after the Facebook access screen is displayed on the image display apparatus 100 based on the Facebook account, which is a first account, displayed text and images may vary according to users, based on the user's search, etc.

In this manner, when different users access the same SNS server, since their preferred content or genre, etc. are different, recommended content from the recommendation server SVm is different.

Specifically, when a first user accesses Facebook with a first account and searches for health-related text and images within the access screen, the recommended content from the recommendation server SVm may be health-related content.

As another example, when a second user accesses Facebook with a second account and searches for a foreign-related drama within the access screen, recommended content from the recommendation server SVm may be content related to a foreign-related drama.

Meanwhile, the signal processing device 170 may be configured to change the information collection method based on the selected social network service account.

For example, when the first account is a Facebook account, the signal processing device 170 may collect information and identify preferred content, based on preferred text and images among displayed text and images.

As another example, when the second account is a Naver account, the signal processing device 170 may collect information based on search-related text and images among the displayed text and images, and identify preferred content.

Accordingly, information collection, etc. is varied based on the service provided by the social network service, making it possible to more accurately identify preferred content, thereby ultimately displaying recommended content accurately.

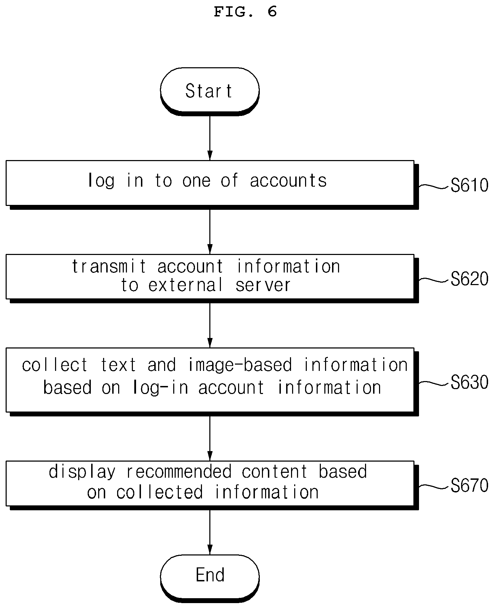

FIG. 6 is a flowchart showing an example of a method of operating an image display apparatus according to an embodiment of the present disclosure.

Referring to the drawing, the signal processing device 170 of the image display apparatus 100 may control to display an account screen including a plurality of accounts based on an input signal or from the remote controller 200 a user voice signal.

Meanwhile, the signal processing device 170 of the image display apparatus 100 may be configured to, when a selection signal for one of the plurality of accounts is received from the remote controller 200, etc., log in to one selected account (S610).

Then, the signal processing device 170 of the image display apparatus 100 may be configured to transmit the selected account information to an external server (S620).

And, after completing the log-in to the first server SVa, the signal processing device 170 of the image display apparatus 100 may display an access screen of the first server SVa based on the data received from the first server SVa.

Then, the signal processing device 170 of the image display apparatus 100 may collect text and image-based information based on account information within the access screen of the first server SVa (S630), and if there is a recommended content display input, the signal processing device 170 may be configured to display recommended content based on the collected information (S670).

Accordingly, appropriate content may be recommended and displayed based on the account and collected information.

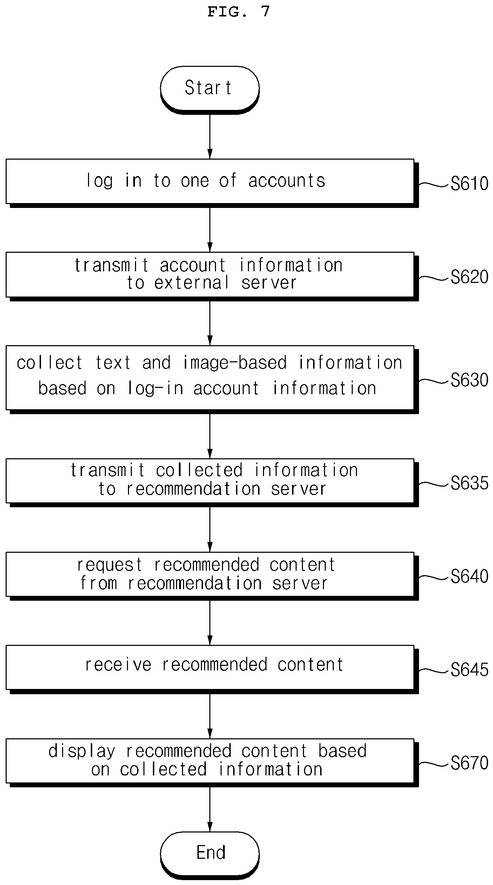

FIG. 7 is a flowchart showing another example of a method of operating an image display apparatus according to an embodiment of the present disclosure.

Referring to the drawing, the signal processing device 170 of the image display apparatus 100 may control to display an account screen including a plurality of accounts based on an input signal from the remote controller 200 or a user voice signal.

Meanwhile, when a selection signal for one of the plurality of accounts is received from the remote controller 200, etc., the signal processing device 170 of the image display apparatus 100 may be configured to log in to the selected account (S610).

Then, the signal processing device 170 of the image display apparatus 100 may be configured to transmit the selected account information to an external server (S620).

For example, when account information for one account among a plurality of accounts is input, the signal processing device 170 of the image display apparatus 100 may be configured to transmit the input account information to an external server.

Meanwhile, the account information may include account information of a social network service.

For example, in FIG. 5, a plurality of social network services (SNS), such as Facebook, Naver, and Google, are shown as examples. Among these, when an account related to Facebook is selected, the signal processing device 170 of the image display apparatus 100 may perform log-in and may be configured to transmit information related to the Facebook account to the first server SVa.

Also, after completing the log-in to the first server SVa, the signal processing device 170 of the image display apparatus 100 may control to display the access screen of the first server SVa based on the data received from the first server SVa.

Then, the signal processing device 170 of the image display apparatus 100 collects text and image-based information based on the account information within the access screen of the first server SVa (S630).

In addition, the signal processing device 170 of the image display apparatus 100 may control to transmit the collected information to the recommendation server SVm through the external apparatus interface 130 or the network interface 135 (S635).

At this time, the recommendation server SVm may be a server provided by the image display apparatus 100, but is not limited thereto and various examples may be provided.

Next, when a recommended content display input is received based on an input signal from the remote controller 200 or a user voice signal, the signal processing device 170 of the image display apparatus 100 may request recommended content from the recommendation server SVm through the external apparatus interface 130 or through the network interface 135 (S640).

Next, the signal processing device 170 of the image display apparatus 100 may receive recommended content from the recommendation server SVm through the external apparatus interface 130 or the network interface 135 (S645).

Next, the signal processing device 170 of the image display apparatus 100 may be configured to display the recommended content received from the recommendation server SVm on the display 180 (S670). Accordingly, appropriate content may be recommended and displayed based on the account and collected information.

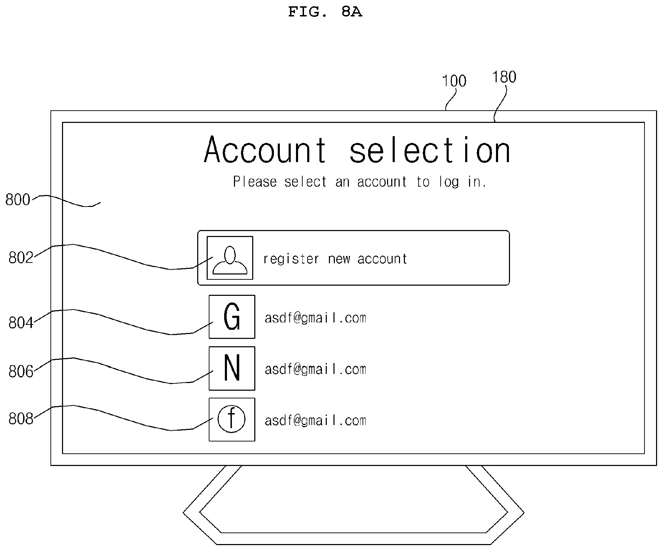

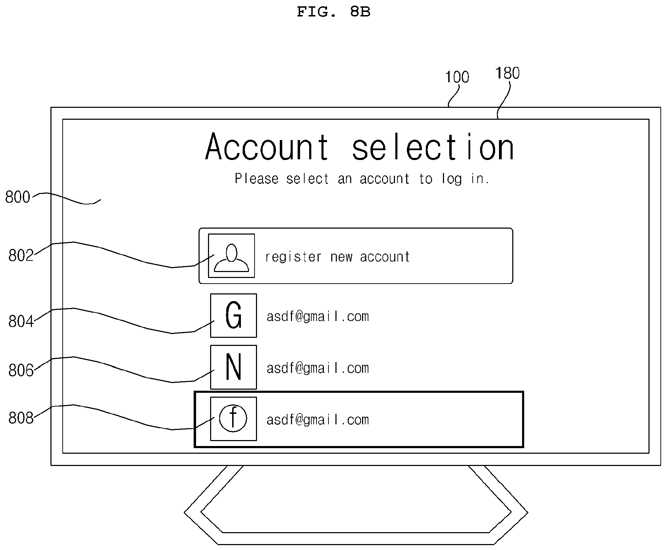

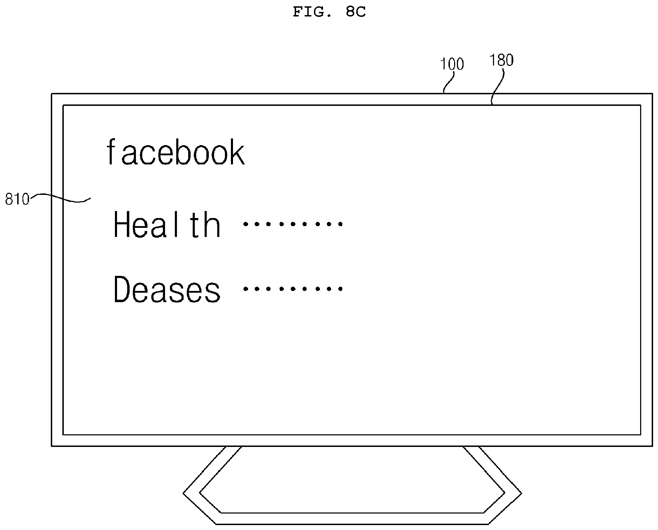

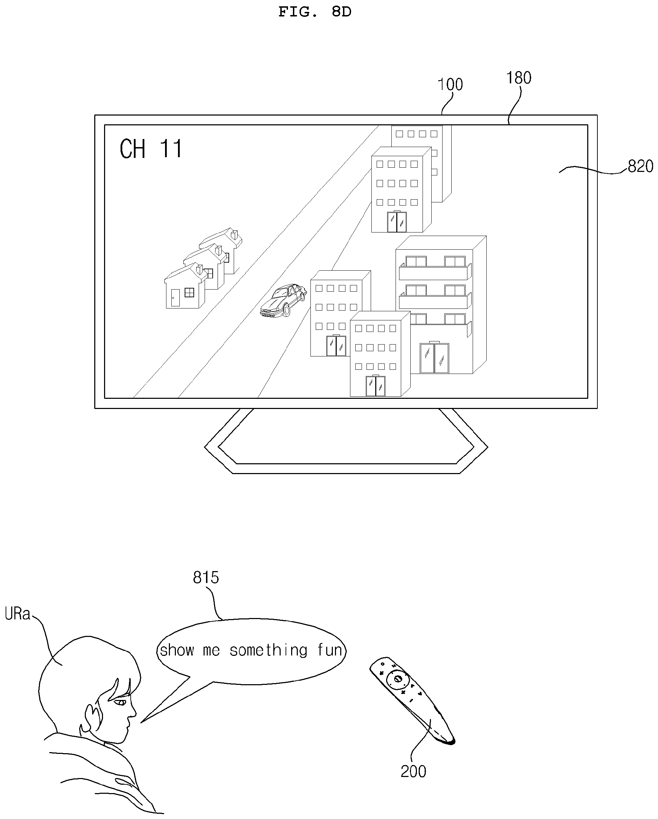

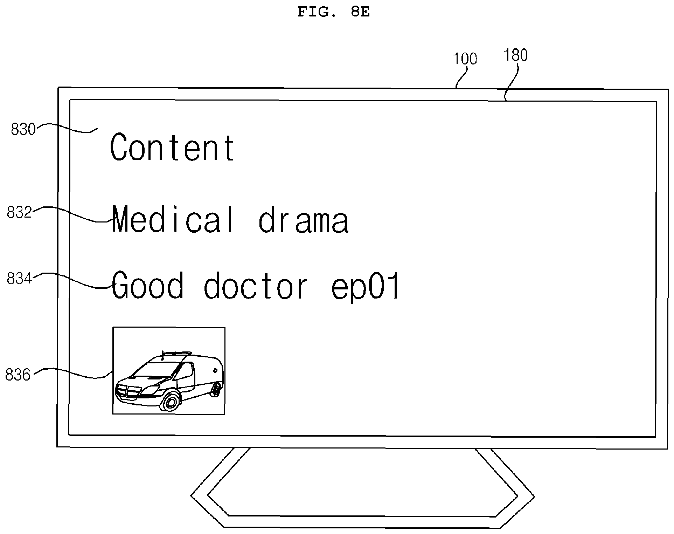

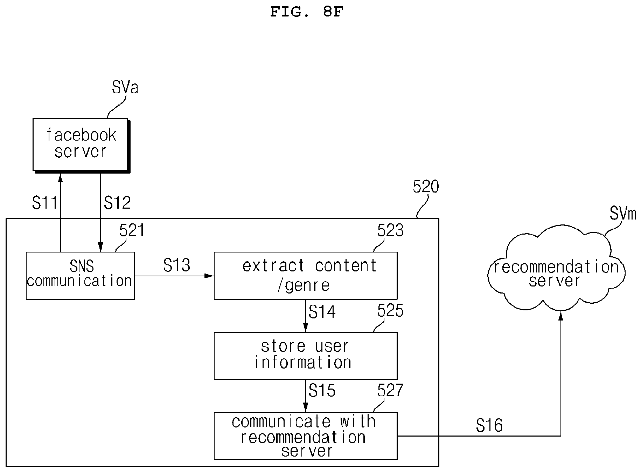

FIGS. 8A to 9E are diagrams referenced in the description of the operation method of FIG. 7 or FIG. 8.

FIG. 8A illustrates an account screen including multiple accounts.

Referring to the drawing, the signal processing device 170 may control to display an account screen 800 including a plurality of accounts based on an input signal from the remote controller 200, etc.

At this time, the plurality of accounts may be accounts of a plurality of social network services.

The signal processing device 170 may be configured to display an SNS account setting item 802, a first SNS account item 808, a second SNS account item 806, and a third SNS account item 804 in the account screen 800.

FIG. 8B illustrates that the first SNS account item 808 is selected from the account screen including a plurality of accounts.

Referring to the drawing, the signal processing device 170 may control the first SNS account item 808 to be selected among a plurality of account items based on an input signal from the remote controller 200, etc.

Meanwhile, when the first SNS account item 808 is selected, the signal processing device 170 may control to transmit first account information corresponding to the first SNS account item 808 to the external first server SVa corresponding to the first account through the external apparatus interface 130 or the network interface 135.

Also, the signal processing device 170 may control to receive data related to the access screen from the external first server SVa through the external apparatus interface 130 or the network interface 135 and display a screen related to the server SVa.

In particular, the signal processing device 170 may control to collect text and image-based information in the screen related to the external first server SVa and display first recommended content based on the collected information.

FIG. 8C illustrates the access screen 810 of the first SNS displayed on the image display apparatus 100.

Meanwhile, the signal processing device 170 may perform search in the access screen 810 of the first SNS based on an input signal from the remote controller 200, etc.

For example, in the case of searching for health-related text and images within the access screen 810, recommended content from the recommendation server SVm may be health-related content.

Next, FIG. 8D illustrates a recommended content display input 815 based on the user's voice.

Referring to the drawing, while displaying a predetermined image 820, the signal processing device 170 receive a recommended content display input 815 based on a user's voice using the remote controller 200.

Accordingly, the signal processing device 170 may request recommended content from the recommendation server SVm through the external apparatus interface 130 or the network interface 135 and receive the recommended content. In addition, the received recommended content may be configured to be displayed.

FIG. 8E illustrates that the recommended content screen 830 is displayed. Referring to the drawing, based on the search for health-related content in FIG. 8C, the signal processing device 170 may control to display a health-related recommended content screen 830 received from the recommendation server SVm.

Meanwhile, the recommended content screen 830 may include recommended content genre information 832, a recommended content item 834, and a recommended content thumbnail item 836. Accordingly, appropriate content may be recommended and displayed based on the account and collected information.

FIG. 8F is a diagram referenced to describe an operation of the information collector 520 of FIG. 5.

Referring to the drawing, the information collector 520 may be configured to transmit the selected account information to an external SNS server SVa corresponding to the selected account information (S11).

For example, when an account for Facebook is selected, the information collector 520 may control to transmit account information for Facebook to the first server SVa through the external apparatus interface 130 or the network interface 135 as SNS communication 521.

Also, the information collector 520 in the signal processing device 170 may control to receive data regarding the access screen from the first server SVa through the SNS communication 521 (S12) and display the access screen on the display 180.

Meanwhile, the information collector 520 may collect information based on data received from the first server SVa.

In particular, the information collector 520 in the signal processing device 170 may collect information based on text and image-based information received from the first server SVa for content or genre extraction 523 (S13).

For example, the text and image-based information may include at least one of text posting information, posting information, search history information, or viewing history information.

Meanwhile, the information collector 520 in the signal processing device 170 may collect information based on text data and image data in various screens that the user searches.

For example, the information collector 520 in the signal processing device 170 may analyze the user's posting information, preferred posting information, etc., using the API of the SNS access screen and extract content information or genre information extracted from the text data.

Meanwhile, the information collector 520 in the signal processing device 170 may store preferred content information or genre information based on the extracted content information or genre information for user information promotion 525 (S14).

Next, in response to a recommended content display input, the information collector 520 in the signal processing device 170 may receive collection information, such as the stored content information or genre information for communication with the recommendation server 527 (S15), and control to transmit the collected information to the content recommendation server SVm through the external apparatus interface 130 or the network interface 135 (S16).

In addition, viewing history information, etc. may be further transmitted to the recommendation server SVm.

Next, in response to a recommended content display input according to an input signal of the remote controller 200 or the user's voice signal, the signal processing device 170 may request recommended content from the recommendation server SVm through the external apparatus interface 130 or the network interface 135.

In addition, the signal processing device 170 may receive recommended content from the recommendation server SVm through the external apparatus interface 130 or the network interface 135 and control the recommended content to be displayed. Accordingly, appropriate content may be recommended and displayed based on the account and collected information.

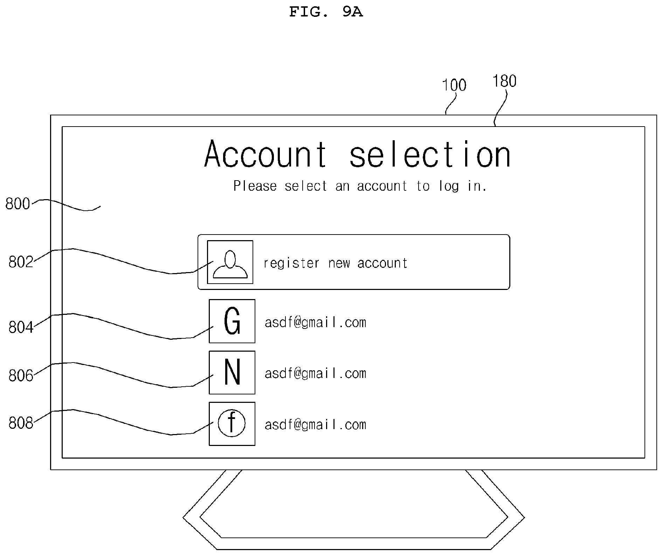

FIG. 9A illustrates an account screen including a plurality of accounts.

Referring to the drawing, the signal processing device 170 may control to display an account screen 800 including a plurality of accounts based on an input signal from the remote controller 200, etc.

The signal processing device 170 may control to display an SNS account setting item 802, a first SNS account item 808, a second SNS account item 806, and a third SNS account item 804 in the account screen 800.

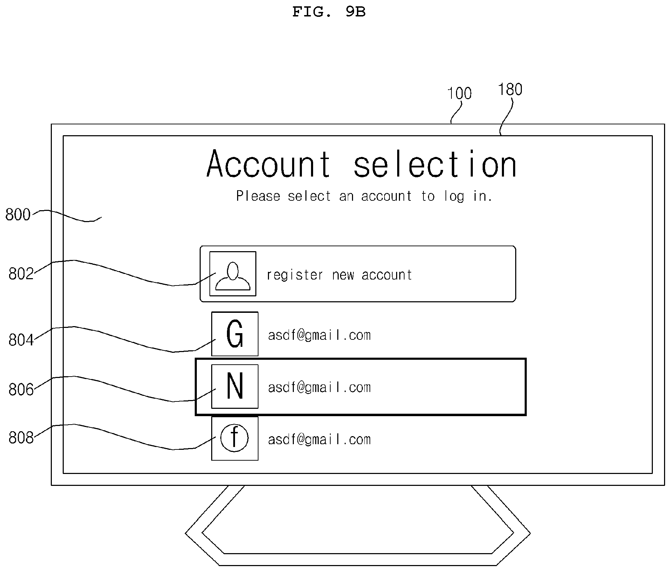

FIG. 9B illustrates that the second SNS account item 806 is selected from an account screen including a plurality of accounts.

Referring to the drawing, the signal processing device 170 may be configured to select the second SNS account item 806 from the plurality of account items based on an input signal from the remote controller 200, etc.

Meanwhile, when the second SNS account item 806 is selected, the signal processing device 170 may control to transmit the second account information corresponding to the second SNS account item 806 to the external second server SVb corresponding to the second account through the external apparatus interface 130 or the network interface 135, as shown in FIG. 5.

Also, the signal processing device 170 may receive data related to the access screen from the external second server SVb through the external apparatus interface 130 or the network interface 135 and control to display a screen related to the external second server SVb.

In particular, the signal processing device 170 may collect text and image-based information in a screen related to the external second server SVb and control the second recommended content to be displayed based on the collected information.

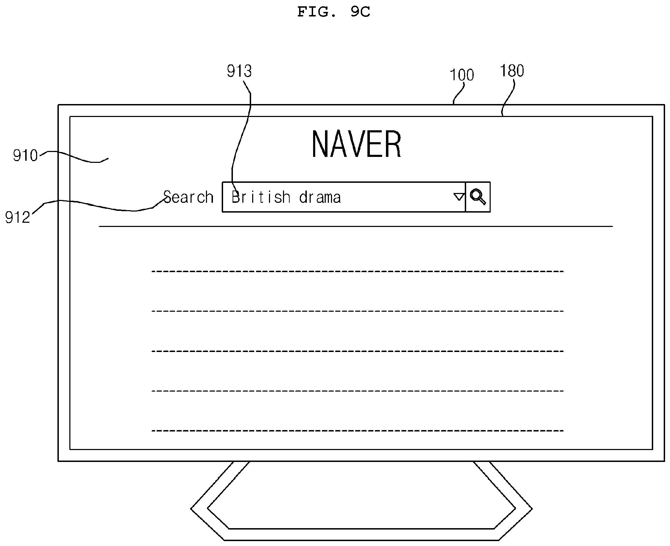

FIG. 9C illustrates an access screen 910 of the second SNS displayed on the image display apparatus 100.

Meanwhile, the signal processing device 170 may perform search in the access screen 910 of the second SNS based on an input signal from the remote controller 200, etc.

For example, in the case of searching for foreign-related dramas in a search box 912 of the access screen 910, recommended content from the recommendation server SVm may be content related to foreign dramas.

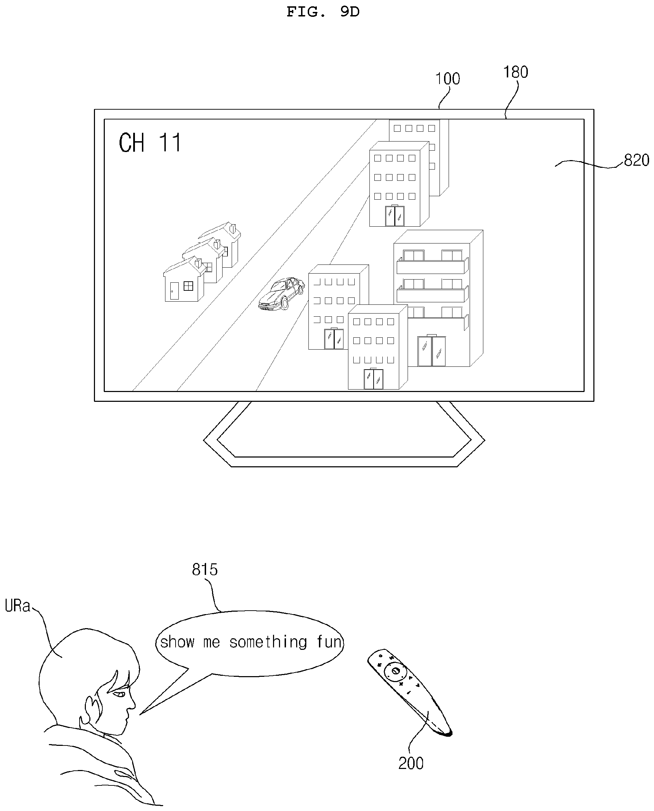

Next, FIG. 9D illustrates a recommended content display input 815 based on the user's voice.

Referring to the drawing, while displaying a predetermined image 820, the signal processing device 170 may receive a recommended content display input 815 based on a user's voice using the remote controller 200.

Accordingly, the signal processing device 170 may request recommended content from the recommendation server SVm through the external apparatus interface 130 or the network interface 135 and receive the recommended content. In addition, the signal processing device 170 may be configured to display the received recommended content.

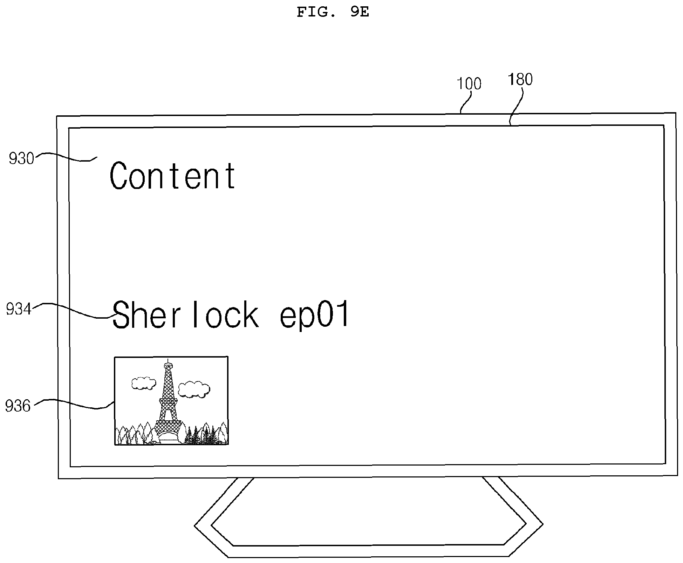

FIG. 9E illustrates that the recommended content screen 930 is displayed.

Referring to the drawing, based on the search for content related to a foreign drama in FIG. 9C, the signal processing device 170 may control to display the recommended content screen 930 related to a foreign drama received from the recommendation server SVm.

Meanwhile, the recommended content screen 930 may include a recommended content item 934 and a recommended content thumbnail item 936. Accordingly, appropriate content may be recommended and displayed based on the account and collected information.

Meanwhile, comparing FIGS. 8A to 8E with FIGS. 9A to 9E, the signal processing device 170 may be configured to change the information collection method based on the account of the selected social network service.

For example, when the first account is a Facebook account, the signal processing device 170 may collect information and identify preferred content based on preferred text and images among displayed text and images.

As another example, when the second account is a Naver account, the signal processing device 170 may collect information and identify preferred content based on search-related text and images among displayed text and images.

Accordingly, information collection, etc. is varied based on the service mainly provided by the social network service, making it possible to more accurately identify preferred content, thereby ultimately displaying recommended content accurately.

While the disclosure has been described with reference to the embodiments, the disclosure is not limited to the above-described specific embodiments, and it will be understood by those skilled in the related art that various modifications and variations may be made without departing from the scope of the disclosure as defined by the appended claims, as well as these modifications and variations should not be understood separately from the technical spirit and prospect of the disclosure.

## Claims

1. An image display apparatus comprising:
a display;
an interface configured to, in response to input of account information, transmit the account information to an external server; and
a signal processing device configured to output an image signal to the display, collect text and image-based information based on the account information, and display recommended content based on the collected information.

2. The image display apparatus of claim 1, wherein,
in response to input of account information on one account among a plurality of accounts, the signal processing device is configured to transmit the input account information to the external server, and
the interface transmits the collected information to a recommendation server and receives recommended content from the recommendation server.

3. The image display apparatus of claim 2, wherein the interface requests the recommended content to he recommendation server.

4. The image display apparatus of claim 2, wherein, in response to a recommended content display input, the signal processing device is configured to display the recommended content based on the collected information.

5. The image display apparatus of claim 1, wherein
the signal processing device includes:
an account information manager configured to manage the account information;
an information collector configured to collect text and image-based information based on the account information; and
a recommended service manager configured to receive and manage recommended content from the recommendation server.

6. The image display apparatus of claim 1, wherein the signal processing device is configured to display an account screen including a plurality of accounts, and in response to a selection of first account information from the plurality of accounts in the account screen, the signal processing device is configured to transmit the selected first account information to an external first server corresponding to the first account and display a screen related to the external first server.

7. The image display apparatus of claim 6, wherein the signal processing device collects text and image-based information in the screen related to the external first server and is configured to display first recommended content based on the collected information.

8. The image display apparatus of claim 6, wherein, in response to a selection of second account information from the plurality of accounts in the account screen, the signal processing device is configured to transmit the selected second account information to an external second server corresponding to the second account and display a screen related to the external second server.

9. The image display apparatus of claim 8, wherein the signal processing device collects text and image-based information in the screen related to the external second server and is configured to display second recommended content based on the collected information.

10. The image display apparatus of claim 1, wherein the account information includes account information of a social network service.

11. The image display apparatus of claim 1, wherein the text and image-based information includes at least one of text posting information, posting information, search history information, or viewing history information.

12. An image display apparatus comprising:
a display;
an interface configured to, in response to input of account information of a social network service, transmit the account information to an external server providing a social network service; and
a signal processing device configured to output an image signal to the display, collect text and image-based information based on the account information, and display recommended content based on the collected information.

13. The image display apparatus of claim 12, wherein
in response to input of account information on one account of a social network service among a plurality of accounts of social network services, the signal processing device is configured to transmit the input account information to the external server, and
the interface transmits the collected information to a recommendation server and receives recommended content from the recommendation server.

14. The image display apparatus of claim 12, wherein, in response to a recommended content display input, the signal processing device is configured to display the recommended content based on the collected information.

15. The image display apparatus of claim 12, wherein the signal processing device is configured to display an account screen including a plurality of accounts of social network services, and in response to a selection of first account information from the plurality of accounts of social network services in the account screen, the signal processing device is configured to transmit the selected first account information to an external first server corresponding to the first account and display a screen related to the external first server.

16. The image display apparatus of claim 15, wherein the signal processing device collects text and image-based information in the screen related to the external first server and is configured to display first recommended content based on the collected information.

17. The image display apparatus of claim 15, wherein, in response to a selection of second account information from the plurality of accounts of social network services in the account screen, the signal processing device is configured to transmit the selected second account information to an external second server corresponding to the second account and display a screen related to the external second server.

18. The image display apparatus of claim 17, wherein the signal processing device collects text and image-based information in the screen related to the external second server and is configured to display second recommended content based on the collected information.

19. The image display apparatus of claim 12, wherein the signal processing device is configured to change the information collection method based on a selected account of a social network service.

20. The image display apparatus of claim 12, wherein the signal processing device is configured to variably display the recommended content according to the collected information.
